# EUROPÄISCHE PATENTSCHRIFT

(11) **EP 0 427 662 B1**
(45) Veröffentlichungstag und Bekanntmachung des Hinweises auf die Patenterteilung: **13.07.1994**
(21) Anmeldenummer: 90810399.7
(22) Anmeldetag: 30.05.1990
(51) Int. Cl.: G01L 11/00

(54) **Hypsometer mit geregelter Heizung insbesondere für die Verwendung in meteorologischen Radiosonden**
Hypsometer with controlled heating specially for use in meteorologic radio-sondes
Hypsomètre avec chauffage côntrolé, spécialement pour l'application aux radiosondes météorologiques

(30) Priorität: 06.11.1989 DE 3936839
(43) Veröffentlichungstag der Anmeldung: 15.05.1991
(73) Patentinhaber: METEOLABOR AG, CH-8620 Wetzikon (CH)
(72) Erfinder: Ruppert, Paul W., CH-8620 Wetzikon (CH)
(74) Vertreter: Rottmann, Maximilian R.

(56) Entgegenhaltungen:
- US-A- 2 901 909
- US-A- 3 276 262

## Beschreibung

Die vorliegende Erfindung betrifft Hypsometer Ansprüche 1, 3 mit geregelter Heizung, insbesondere für die Verwendung in meteorologischen Radiosonden, mit einem offenen Siedegefäss, das aus einem die Messflüssigkeit enthaltenden Kolben und einem an den Kolben anschliessenden Hals besteht, wobei der Gefässkolben einen in die Messflüssigkeit eintauchenden elektrischen Heizwiderstand und einen die Siedepunkt-Temperatur erfassenden Temperaturfühler aufweist, und wobei ein adaptives Regelsystem vorgesehen ist, welches die Heizleistung auf einen der jeweiligen Siedepunkt-Temperatur angepassten Wert regelt.

Das Hypsometer ist ein Siedepunkttemperatur-Barometer, mit dem über den Zusammenhang zwischen Sättigungsdampfdruck und Siedetemperatur der Luftdruck bestimmt werden kann. Dabei ändert sich die Siedetemperatur logarithmisch mit dem Druck, was in Anwendungen mit grossem Druck-Messbereich den Vorteil bietet, dass bei gleichbleibender absoluter Messgenauigkeit der Siedetemperatur die relative Druck-Messgenauigkeit gleich bleibt. Meteorologische Radiosonden durchfliegen bei ihrem Aufstieg in 35 km Höhe einen Druckbereich von 1000 hPa bis 5 hPa. Deshalb eignet sich das Hypsometer besser als die im allgemeinen verwendeten Aneroid-Barometer. Ein weiterer wesentlicher Vorteil des Hypsometers gegenüber dem Aneroid-Barometer ist der, dass ersteres nicht individuell geeicht werden muss, da der Zusammenhang zwischen Druck und Siedetemperatur genügend genau bekannt ist. Sonden, die nicht geeicht werden müssen, können ohne weiteres wieder verwendet werden, nachdem sie gefunden wurden. Dies ist auch aus ökologischen Gründen sinnvoll. Es wurde deshalb schon vor Jahrzehnten vorgeschlagen, Radiosonden mit Hypsometern auszurüsten.

Geheizte Hypsometer verwenden eine Flüssigkeit, deren Siedetemperatur höher ist als die Umgebungstemperatur, z.B. Wasser. Die Heizleistung darf nicht gross sein, da sie aus mitfliegenden Batterien aufgebracht werden muss. Es ist deshalb eine geringe Flüssigkeitsmenge anzustreben. Um jedoch mit einer geringen Flüssigkeitsmenge eine ausreichend lange Betriebsdauer zu erreichen, darf während des Betriebs des Hypsometers keine Flüssigkeit durch Kondensation des Dampfes ausserhalb des Siedegefässes verloren gehen. Andererseits muss die Heizleistung stets so gross sein, dass der Siedevorgang im ganzen Druckbereich aufrechterhalten wird. Um diese Forderungen zu erfüllen, ist eine geeignete Regelung der Heizleistung vorzusehen.

Bei einem bekannten Hypsometer der eingangs genannten Art (Lueger, Lexikon der Technik, 4. Auflage, 1968, Band 13, Seite 456) ist eine Regelung der Heizleistung mit einem Thermostaten vorgesehen, dessen Temperaturmesspunkt sich im Dampfausdehnungsraum befindet. Diese Regelung funktioniert jedoch nur in einem engen Bereich der Siedetemperatur, in dem mit einer konstanten Solltemperatur am Temperaturmesspunkt des Thermostaten gearbeitet werden kann. Sobald die Siedetemperatur diesen Bereich über- oder unterschreitet, fällt die am Messpunkt herrschende Temperatur aus dem Regelbereich des Thermostaten, so dass die Heizleistung bei weiter abnehmender Siedetemperatur stets voll eingeschaltet und bei weiter zunehmender Siedetemperatur ganz abgeschaltet ist. In diesen Phasen ist jedoch ein ordentlicher Betrieb des Hypsometers nicht mehr gewährleistet, weil die genannten Randbedingungen dafür nicht mehr erfüllt sind. Dieses Hypsometer eignet sich daher zwar for einen stationären Betrieb, nicht aber für die Verwendung in meteorologischen Radiosonden, bei deren Flug die Siedetemperatur sich von 100 °C bis auf wenige Grad ändern kann.

Die zum Sieden nötige Heizleistung nimmt mit zunehmender Höhe ab, da einerseits der Luftdruck und damit die Siedetemperatur sinkt und andererseits mit sinkendem Luftdruck die Wärmeleitfähigkeit der Luft und damit der Wärmeverlust geringer wird. Zwar funktioniert das Hypsometer auch dann einwandfrei, wenn dauernd die for den Bodendruck notwendige grosse Heizleistung zugeführt wird. Der Grund für diese Toleranz des Instruments ist die grosse Verdampfungswärme von Wasser. Die dauernde Zufuhr von zuviel Heizleistung ist aber nicht nur wegen der damit verbundenen Gefahr eines übermässigen Flüssigkeitsverlustes, sondern vor allem auch aus Versorgungsgründen unerwünscht, da die Energie aus einer Batterie aufgebracht werden muss. Neben den Kosten ist besonders das Gewicht von unnötig grossen Batterien bei Radiosondenanwendungen störend.

Die US-A-3276262 beschreibt ein Hypsometer, das mit einem adaptiven Regelsystem ausgerüstet ist, welches den Heizstrom so regelt, dass die Verdampfungsrate unabhängig von dem Druck und der Temperatur der Umgebung auf einen verhältnismässig konstanten Wert eingestellt wird. Auf diese Weise findet eine gewisse Anpassung der Heizleistung an die jeweilige Siedepunkt-Temperatur statt, wodurch Heizenergie gespart wird. Andererseits soll mit einer langen, an das Siedegefäss sich anschliessenden Kondensationsstrecke erreicht werden, dass die verdampfte Messflüssigkeit vollständig innerhalb des Geräts kondensiert, so dass die Flüssigkeitsmenge über eine längere Einsatzdauer des Geräts erhalten bleibt.

Der Erfindung liegt die Aufgabe zugrunde, eine Regelung der Heizleistung vorzusehen, die es ermöglicht, die Lage der Kondensationszone im ganzen Druckbereich innerhalb des Gefässhalses zu stabilisieren und damit zugleich die Heizleistung dem jeweiligen Bedarf anzupassen.

Diese Aufgabe lässt sich bei einem Hypsometer der eingangs genannten Art dadurch lösen, dass erfindungsgemäss Mittel zur Messung des Temperaturabfalls im Gefässhals längs einer an dessen unterem Ende liegenden Messstrecke vorgesehen sind und dass eine bestimmte Temperaturdifferenz als Sollwert für die Regelung der Heizleistung dient, wobei die Regelung der Heizleistung so vorgesehen ist, daß die Lage der Kondensationszone im ganzen Druckbereich innerhalb des Gefäßhalses stabilisiert ist.

Diese Temperaturdifferenz ändert sich stark, je nachdem, ob die Kondensationszone des Dampfes unterhalb, innerhalb oder oberhalb der Messstrecke liegt. Die Lage der Kondensationszone wird durch die pro Zeiteinheit erzeugte Dampfmenge, d.h. durch das Mass der Heizleistung bestimmt. Die Temperaturdifferenz über der Messstrecke ist praktisch Null, wenn die Kondensationszone oberhalb der Messstrecke liegt. Die Regelung arbeitet deshalb vorzugsweise mit einem kleinen Sollwert der Temperaturdifferenz von z.B. 1 °C. Damit ist gewährleistet, dass sich die Kondensationszone knapp oberhalb der Messstrecke befindet, und zwar unabhängig von der jeweiligen Siedetemperatur, mit dem Ergebnis, dass im ganzen Druckbereich die Flüssigkeit mit Sicherheit siedet und der Dampf stets innerhalb des Siedegefässes kondensiert. Mit dieser Lösung in Form eines indirekten adaptiven Regelsystems lässt sich zugleich eine optimale Anpassung der Heizleistung an den jeweiligen Bedarf erzielen.

Das Hypsometer nach der US-A-3276262 weist zwar ein ähnliches Regelsystem auf, unter dessen Wirkung die Differenz der Temperaturen an zwei Messpunkten annähernd konstant bleibt. Die Anordnung der dafür vorgesehenen Temperaturfühler ist aber nicht geeignet, die Kondensationszone auf einen innerhalb des Siedegefässes liegenden Raum zu begrenzen. Ferner dient hier nicht die Temperaturdifferenz, sondern das Verhältnis der Temperaturen an den beiden Messpunkten als Sollwert für die Temperaturdifferenz nur dann näherungsweise konstant, solange sie im Vergleich zur Siedepunkt-Temperatur sehr klein ist, d.h. wenn das Temperaturverhältnis nur wenig von 1 abweicht. Diese Bedingung ist aber nur in einem verhältnismässig engen Schwankungsbereich der Siedepunkt-Temperatur erfüllt. Bei grösseren Schwankungen der Siedepunkt-Temperatur, wie sie bei einer Radiosonde auftreten, würde das Temperaturverhältnis sehr bald aus dem Regelbereich fallen. Mit einem solchen Regelsystem kann es also nicht gelingen, den Temperturabfall an der Messstrecke über einen grösseren Druckbereich konstant zu halten.

Wenn man davon ausgeht, dass unter Einhaltung der Randbedingungen (Aufrechterhaltung des Siedevorganges, Vermeidung von Flüssigkeitsverlust) eine genaue Regelung der Heizleistung aus messtechnischen Gründen nicht notwendig ist, lässt sich eine einfachere Lösung mit einem direkten adaptiven Regelsystem bei einem Hypsometer der eingangs genannten Art dadurch erzielen, dass als Heizwiderstand ein Thermistor mit negativem Temperaturkoeffizienten (NTC) vorgesehen ist, wobei die Regelung der Heizleistung so vorgesehen ist, daß die Lage der Kondensationszone im ganzen Druckbereich innerhalb des Gefäßhalses stabilisiert ist. Schliesst man einen derartigen Thermistor in Luft an eine Spannungsquelle an, so erwärmt er sich zunehmend bis zu seiner Zerstörung. Es ist deshalb in der Technik völlig unüblich, mit NTC-Widerständen zu heizen. Anders verhält sich der NTC- Heizwiderstand in einer siedenden Flüssigkeit. Die dem NTC- Heizwiderstand allenfalls zuviel zugeführte Heizleistung kann diesen nicht über die Siedetemperatur hinaus erwärmen. Die überschüssige Leistung wird vielmehr für das Verdampfen der Flüssigkeit verbraucht. Sinkt nun beispielsweise die Siedetemperatur wegen Abnahme des Luftdrucks, dann nimmt der Widerstandswert des Thermistors infolge seines negativen Temperaturkoeffizienten von z.B. etwa 4 %/°C zu und reduziert damit bei gleichbleibender Batteriespannung die umgesetzte Heizleistung. Damit wird über die Widerstands-Temperatur-Kennlinie die Heizleistung von der Siedetemperatur abhängig. Mit Vorteil werden die Kennlinie des Thermistors und die durch dessen Widerstandswert und die Batteriespannung bestimmte Heizleistung so gewählt, dass dem Hypsometer im ganzen Druckbereich eine um einen Sicherheitsfaktor grössere Heizleistung zugeführt wird, als zum Sieden nötig wäre. Dadurch ist trotz der durch Exemplarstreuungen entstehenden Unterschiede der Anordnung ein sicheres Sieden der Flüssigkeit in jedem Betriebszustand gewährleistet.

Diese Lösung mit einem direkten adaptiven Regelsystem, bei dem das Heizelement unter dem Regeleinfluss der Siedetemperatur die Heizleistung selbst steuert, hat den Vorteil, dass ausser dem Ersatz eines festen Heizwiderstandes durch einen NTC-Thermistor kein zusätzlicher Aufwand nötig ist. Insbesondere entfallen die bei der zuvor beschriebenen Lösung erforderlichen Mittel zur Messung der Temperaturdifferenz und der separate Heizregler. Trotz des wesentlich einfacheren Aufbaus eines Hypsometers mit NTC-Heizwiderstand, lässt sich auf diese Weise das Batteriegewicht zumindest halbieren.

In der beigefügten Zeichnung sind die beiden beschriebenen Ausführungsbeispiele der Erfindung schematisch dargestellt, und zwar zeigt:
- Fig. 1: ein Hypsometer mit einer auf der Basis einer Temperaturdifferenz-Messung durchgeführten Regelung der Heizleistung und
- Fig. 2: ein Hypsometer mit einem NTC-Thermistor als Heizwiderstand.

Das Hypsometer besteht in beiden Ausführungsformen aus einem Siedegefäss 1, z.B. aus Glas, das einen Gefässkolben 2 und einen an diesen anschliessenden, oben offenen Gefässhals 3 aufweist. Der Gefässkolben 2 enthält die Messflossigkeit 4, z.B. Wasser oder Methanol, und einen Temperaturfühler 5, vorzugsweise in Form eines elektrischen Thermoelementes, das die Siedepunkt-Temperatur im Dampfraum oberhalb des Flüssigkeitsspiegels misst und von dem eine Ableitung 6 nach aussen führt.

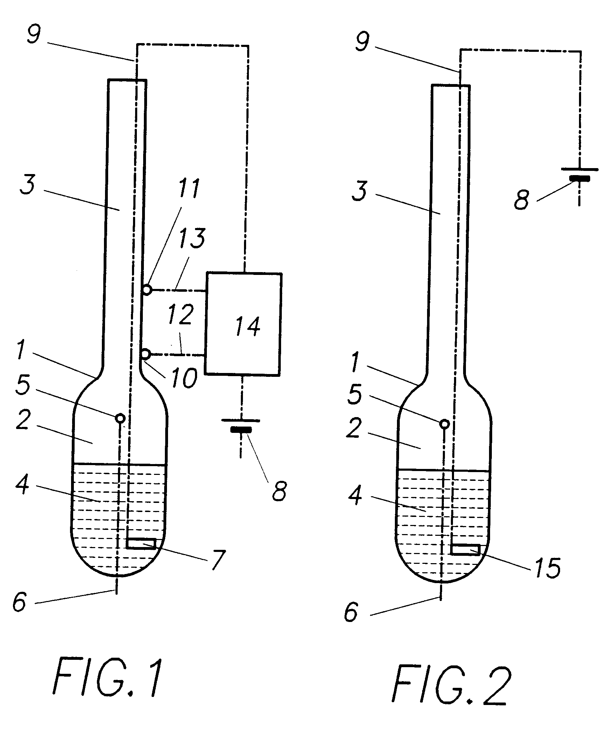

Der Gefässkolben 2 enthält in der Ausführungsform nach Fig. 1 ferner einen in die Messflüssigkeit 4 eintauchenden elektrischen Heizwiderstand 7 üblicher Art, dem die Heizenergie aus einer Batterie 8 über eine Zuleitung 9 zugeführt wird. Unmittelbar oberhalb des Gefässkolbens 2 befinden sich zwei Messpunkte zur Bestimmung des Temperaturabfalls in dem durch diese Messpunkte begrenzten Bereich des Gefässhalses 3. An diesen Messpunkten ist je ein Temperaturfülhler 10 bzw. 11 angeordnet, der über eine Signalleitung 12 bzw. 13 mit einem Heizregler 14 verbunden ist. Dieser regelt die dem Heizwiderstand 7 zugeführte Heizleistung so, dass die Temperaturdifferenz zwischen den beiden Messpunkten auf einem bestimmten Sollwert von z.B. 1 °C gehalten wird.

Bei der Ausführungsform nach Fig. 2 ist anstelle eines gewöhnlichen Heizwiderstandes (7 in Fig. 1) ein Thermistor 15 mit negativem Temperaturkoeffizienten vorgesehen, der direkt aus der Batterie 8 über die Zuleitung 9 gespeist wird. Die in Fig. 1 vorhandene Regelschaltung mit den Teilen 10 bis 14 entfällt bei der Ausführung nach Fig. 2.

## Patentansprüche

1. Hypsometer mit geregelter Heizung, insbesondere für die Verwendung in meteorologischen Radiosonden, mit einem offenen Siedegefäss (1), das aus einem die Messflüssigkeit (4) enthaltenden Kolben (2) und einem an den Kolben anschliessenden Hals (3) besteht, wobei der Gefässkolben (2) einen in die Messflüssigkeit (4) eintauchenden elektrischen Heizwiderstand (7) und einen die Siedepunkt-Temperatur erfassenden Temperaturfühler (5) aufweist, und wobei ein adaptives Regelsystem vorgesehen ist, welches die Heizleistung auf einen der jeweiligen Siedepunkt-Temperatur angepassten Wert regelt, dadurch gekennzeichnet, dass Mittel (10, 11, Fig.1) zur Messung des Temperaturabfalls im Gefässhals (3) längs einer an dessen unterem Ende liegenden Messstrecke vorgesehen sind und dass eine bestimmte Temperaturdifferenz als Sollwert für die Regelung der Heizleistung dient, wobei die Regelung der Heizleistung so vorgesehen ist, daß die Lage der Kondensationszone im ganzen Druckbereich innerhalb des Gefäßhalses (3) stabilisiert ist.

2. Hypsometer nach Anspruch 1, dadurch gekennzeichnet, dass der Sollwert der Temperaturdifferenz etwa 1 °C beträgt.

3. Hypsometer mit geregelter Heizung, insbesondere für die Verwendung in meteorologischen Radiosonden, mit einem offenen Siedegefäss (1), das aus einem die Messflüssigkeit (4) enthaltenden Kolben (2) und einem an den Kolben anschliessenden Hals (3) besteht, wobei der Gefässkolben (2) einen in die Messflüssigkeit (4) eintauchenden elektrischen Heizwiderstand (7) und einen die Siedepunkt-Temperatur erfassenden Temperaturfühler (5) aufweist, und wobei ein adaptives Regelsystem vorgesehen ist, welches die Heizleistung auf einen der jeweiligen Siedepunkt-Temperatur angepassten Wert regelt, dadurch gekennzeichnet, dass als Heizwiderstand ein mit konstanter Spannung betriebener Thermistor (15, Fig. 2) mit negativem Temperaturkoeffizienten vorgesehen ist, wobei die Regelung der Heizleistung so vorgesehen ist, daß die Lage der Kondensationszone im ganzen Druckbereich innerhalb des Gefäßhalses (3) stabilisiert ist.

4. Hypsometer nach Anspruch 3, dadurch gekennzeichnet, dass die Kennlinie des Thermistors (15) und die durch dessen Widerstandswert und die Speisespannung bestimmte Heizleistung so gewählt sind, dass dem Hypsometer im ganzen Druckbereich eine um einen Sicherheitsfaktor grössere Heizleistung zugeführt wird, als zum Sieden notwendig wäre.

5. Hypsometer nach Anspruch 1 oder 3, dadurch gekennzeichnet, dass als Messflüssigkeit (4) Wasser dient.

6. Hypsometer nach Anspruch 1 oder 3, dadurch gekennzeichnet, dass als Messflüssigkeit (4) Methanol dient.

## Claims

1. Hypsometer with controlled heating, in particular for use in meteorologic radio-sondes, with an open boiling vessel (1), which consists of a flask (2) containing the measuring liquid (4) and a neck (3) adjoining the flask, the vessel flask (2) comprising an electrical heating resistance (7) immersed in the measuring liquid (4) and a temperature sensor (5) monitoring the boiling point temperature, and an adaptive control system being provided, which controls the heating capacity at a value adapted to the respective boiling point temperature, characterised in that means (10, 11, Figure 1) are provided for measuring the temperature drop in the vessel neck (3) along a measuring section located at its lower end and that a certain temperature difference serves as a reference value for controlling the heating capacity, the control of the heating capacity being provided so that the position of the condensation zone is stabilised in the entire pressure range within the vessel neck (3).

2. Hypsometer according to Claim 1, characterised in that the reference value of the temperature difference amounts to approximately 1°C.

3. Hypsometer with controlled heating, in particular for use in meteorolgic radio-sondes, with an open boiling vessel (1), which consists of a flask (2) containing the measuring liquid (4) and a neck (3) adjoining the flask, the vessel flask (2) comprising an electrical heating resistance (7) immersed in the measuring liquid (4) and a temperature sensor (5) monitoring the boiling point temperature, and an adaptive control system being provided, which controls the heating capacity to a value adapted to the respective boiling point temperature, characterised in that provided as the heating resistance is a thermistor (15, Figure 2) operated at constant voltage, with a negative temperature coefficient, the control of the heating capacity being provided so that the position of the condensation zone is stabilised in the entire pressure range within the vessel neck (3).

4. Hypsometer according to Claim 3, characterised in that the characteristic of the thermistor (15) and the heating capacity determined by its resistance value and the supply voltage are chosen so that there is supplied to the hypsometer in the entire pressure range, a heating capacity which is greater by a safety factor than would be necessary for boiling.

5. Hypsometer according to Claim 1 or 3, characterised in that water serves as the measuring liquid (4).

6. Hypsometer according to Claim 1 or 3, characterised in that methanol serves as the measuring liquid (4).

## Revendications

1. Hypsomètre à régulation du chauffage, notamment pour une utilisation dans des radiosondes météorologiques, comprenant un réservoir d'ébullition (1) ouvert qui est constitué d'une ampoule (2), contenant le liquide de mesure (4), et d'un col (3) prolongeant l'ampoule, l'ampoule de réservoir (2) comportant une résistance chauffante électrique (7), qui plonge dans le liquide de mesure (4), et une sonde de température (5) détectant la température de point d'ébullition, tandis qu'il est prévu un système de régulation de type adaptatif qui assure la régulation de la puissance de chauffage à une valeur adaptée à chaque instant à la température correspondante du point d'ébullition, caractérisé en ce qu'il est prévu des moyens (10, 11, figure 1) permettant de mesurer la diminution de température dans le col (3) du réservoir le long d'une section de mesure située à l'extrémité inférieure de ce col (3) et en ce qu'une différence de température déterminée sert de valeur de consigne pour la régulation de la puissance de chauffage, tandis que la régulation de la puissance de chauffage est prévue d'une façon telle que la position de la zone de condensation est stabilisée à l'intérieur du col (3) du réservoir sur toute l'étendue de l'intervalle de pressions.

2. Hypsomètre selon la revendication 1, caractérisé en ce que la valeur de consigne de la différence de température est égale à 1 °C environ.

3. Hypsomètre à régulation du chauffage, notamment pour une utilisation dans des radiosondes météorologiques, comprenant un réservoir d'ébullition (1) ouvert qui est constitué d'une ampoule (2), contenant le liquide de mesure (4), et d'un col (3) prolongeant l'ampoule, l'ampoule de réservoir (2) comportant une résistance chauffante électrique (7), qui plonge dans le liquide de mesure (4), et une sonde de température (5) détectant la température de point d'ébullition, tandis qu'il est prévu un système de régulation de type adaptatif qui assure la régulation de la puissance de chauffage à une valeur adaptée à chaque instant à la température correspondante du point d'ébullition, caractérisé en ce que, comme résistance de chauffage, il est prévu un thermistor (15, figure 2) à coefficient de température négatif qui est soumis à l'application d'une tension constante, la régulation de la puissance de chauffage étant prévue d'une façon telle que la position de la zone de condensation est stabilisée à l'intérieur du col (3) du réservoir sur toute l'étendue de l'intervalle de pressions.

4. Hypsomètre selon la revendication 3, caractérisé en ce que la caractéristique du thermistor (15) et la puissance de chauffage déterminée par la valeur de résistance de ce thermistor et par la tension d'alimentation sont choisies d'une façon telle que, sur toute l'étendue de l'intervalle de pressions, il est fourni à l'hypsomètre une puissance de chauffage qui est supérieure, d'un facteur de sécurité, à la valeur qui serait nécessaire pour l'ébullition.

5. Hypsomètre selon l'une des revendications 1 et 3, caractérisé en ce que l'eau sert de liquide de mesure (4).

6. Hypsomètre selon l'une des revendications 1 et 3, caractérisé en ce que le méthanol sert de liquide de mesure (4).
